# EUROPEAN PATENT APPLICATION

(11) **EP 1 717 529 A2**
(43) Date of publication of application: **02.11.2006**
(21) Application number: 06008858.0
(22) Date of filing: 28.04.2006
(51) Int. Cl.: F25B 27/00, F25B 13/00

(54) **Cogeneration system**

(30) Priority: 28.04.2005 KR 20050035511
(71) Applicant: LG Electronics, Inc., Seoul 150-010 (KR)
(72) Inventor: Cho, Eun Jun, Wonmi-ku, Buchun-si Kyunggi-do 420-030 (KR); Ha, Sim Bok, Kwangmyung-si Kyungki-do 423-010 (KR); Chung, Baik Young, Yongjong-dong Kyeyang-ku Inchunsi407-710 (KR); Kim, Cheol Min, Youngdeungpo-ku Seoul 150-054 (KR); Chang, Se Dong, Kwangmyung-si Kyungki-do 423-060 (KR)
(74) Representative: Vossius & Partner

(57) **Abstract**

A cogeneration system according to the present invention includes a waste heat supply heat exchanger (80) that supplies waste heat, which is recovered from an engine (52), to a suction unit side of a compressor (70). Accordingly, the present invention is advantageous in that it can maximize the use efficiency of the waste heat. Furthermore, a low compression inverter type compressor having a compression ratio of 1.5 to 2.5, which is lower than that of the related art, is used. Therefore, the present invention is advantageous in that it can maximize the efficiency of the system since the waste heat supplied from the waste heat supply heat exchanger can be utilized to a greater extent. The present invention is also advantageous in that it can prevent damage to the compressor and can save consumption power since a difference in pressure between the suction and discharge units of the compressor becomes small.

## Description

The present invention relates to a cogeneration system. More particularly, the present invention relates to a cogeneration system including a waste heat supply heat exchanger for supplying waste heat recovered from an engine to a suction unit of a compressor, wherein the compressor is a low compression inverter type compressor with a compression ratio of 1.5 to 2.5 whereby the waste heat supplied from the waste heat supply heat exchanger can be utilized to a greater extent and the system efficiency can be maximized accordingly.

In general, a combined heat power plant is also called a cogeneration system and is a system that produces electric power and heat at the same time using one energy source.

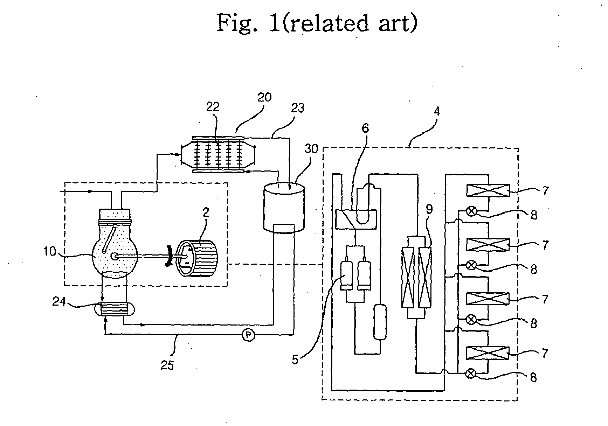

FIG. 1 is a view schematically showing the construction of a cogeneration system in the related art.

The related art cogeneration system includes a generator 2 that generates electric power, a driving source (hereinafter, referred to as an " engine" ) that drives the generator 2 and generates heat, such as an engine 10, a waste heat recovery apparatus 20 that recovers waste heat generated from the engine 10, a heat demand place 30 such as a heat storage tank that utilizes the waste heat of the waste heat recovery apparatus 20, and so on, as shown in FIG. 1.

The electric power generated from the generator 2 is supplied to a variety of lighting apparatuses, electronic appliances such as a heat pump type air conditioner 4 and the like.

The generator 2 and the engine 10 are disposed within an engine room, which is separated from the heat demand place 30.

The heat pump type air conditioner 4 includes a compressor 5, a 4-way valve 6, an indoor heat exchanger 7, an expansion valve 8 and an outdoor heat exchanger 9.

In the heat pump type air conditioner 4, during the air cooling operation, the refrigerants compressed in the compressor 5 are circulated through the 4-way valve 6, the outdoor heat exchanger 9, the expansion valve 8, the indoor heat exchanger 7 and the 4-way valve 6, sequentially, and then reach the compressor 5. Therefore, the outdoor heat exchanger 9 serves as a condenser and the indoor heat exchanger 7 serves as an evaporator, thereby depriving heat of the indoor air.

On the other hand, during the heating operation, the refrigerants compressed in the compressor 5 are circulated through the 4-way valve 6, the indoor heat exchanger 7, the expansion valve 8, the outdoor heat exchanger 9 and the 4-way valve 6 sequentially, and then reach the compressor 5. Therefore, the outdoor heat exchanger 9 serves as the evaporator and the indoor heat exchanger 7 serves as the condenser, thereby heating the indoor air.

The waste heat recovery apparatus 20 includes an exhaust gas heat exchanger 22 that deprives heat of an exhaust gas discharged from the engine 10, and a coolant heat exchanger 24 that deprives heat of the coolant that has cooled the engine 10.

The exhaust gas heat exchanger 22 is connected to the heat demand place 30 through a first heat supply line 23. The exhaust gas heat exchanger 22 transfers the waste heat, which has been deprived of the exhaust gas of the engine 10, to the heat demand place 30 through the first heat supply line 23.

The coolant heat exchanger 24 is connected to the heat demand place 30 through a second heat supply line 25. The coolant heat exchanger 24 transfers heat, which has been deprived of the coolant that had cooled the engine 10, to the heat demand place 30 through the second heat supply line 25.

In the related art cogeneration system, however, the waste heat recovered from the exhaust gas heat exchanger 22 and the coolant heat exchanger 24 is used only for hot water, etc. such as in the heat demand place. Therefore, a problem arises because the system efficiency cannot be maximized.

The present invention has been developed in an effort to provide a cogeneration system in which waste heat recovered from a driving source is supplied to a compressor suction unit side of an air conditioner and a compressor with the lowest compression ratio is used, thus improving the efficiency of the system.

A cogeneration system according to an embodiment of the present invention includes a generator that generates electric power, a driving source that drives the generator and generates heat, waste heat recovery means that recovers waste heat of the driving source, an air conditioner including a compressor, a 4-way valve, indoor heat exchangers, expansion valves and an outdoor heat exchanger, and a waste heat supply heat exchanger for supplying the heat, which is recovered from the waste heat recovery means, to a suction unit side of the compressor. The compressor may have a compression ratio of 1.5 to 2.5.

The compressor may be a low compression inverter type compressor having a variable compression ratio.

The air conditioner may further include a high compression constant speed type compressor having a compression ratio of 3, 4 or 5.

The air conditioner may further include a high compression inverter type compressor having a compression ratio having a compression ratio of 3 to 5.

The cogeneration system may further include a bypass flow path along which the refrigerants, which have passed the expansion valves, bypass the outdoor heat exchangers during the heating operation of the air conditioner.

The outdoor expansion valve for expanding the refrigerants introduced from an indoor unit side is disposed on the suction unit side of the bypass flow path. A third check valve for preventing the refrigerants, which are sucked into the outdoor heat exchanger, from flowing backward into the bypass flow path during the air cooling operation is disposed on the discharge unit side of the bypass flow path.

The waste heat recovery means may include exhaust gas heat exchangers for recovering the heat of an exhaust gas discharged from the driving source, and a coolant heat exchanger for recovering the heat of the coolant that has cooled the driving source.

The cogeneration system may further include heat dissipation means for dissipating the heat, which is recovered from the coolant heat exchanger and the exhaust gas heat exchangers to the outside during the air cooling operation of the air conditioner.

The waste heat supply heat exchanger may be disposed parallel to the outdoor heat exchanger on a refrigerant circulation flow path along which the refrigerants that are circulated through the air conditioner are guided.

An air cooling flow path for causing the refrigerants discharged from the first and second compressors to bypass the waste heat supply heat exchanger during the air cooling operation may be disposed between the flow paths of inlet and outlet sides of the waste heat supply heat exchanger.

The cogeneration system according to the present invention includes a waste heat supply heat exchanger that supplies waste heat, which is recovered from the engine, to a suction unit side of a compressor. Accordingly, the present invention is advantageous in that it can maximize the use efficiency of waste heat.

Furthermore, the cogeneration system includes a low compression inverter type compressor having a compression ratio of 1.5 to 2.5, which is lower than that of the related art. Therefore, the present invention is advantageous in that it can maximize the efficiency of the cogeneration system since waste heat supplied from a waste heat supply heat exchanger can be utilized to a greater extent. The present invention is also advantageous in that it can prevent damage to the compressor and can save consumption power since a difference in pressure between suction and discharge units of the compressor becomes small.

A more complete appreciation of the invention, and many of the attendant advantages thereof, will be readily apparent as the same becomes better understood by reference to the following detailed description when considered in conjunction with the accompanying drawings in which like reference symbols indicate the same or similar components, wherein:
FIG. 1 is a view schematically showing the construction of a cogeneration system in the related art;
FIG. 2 is a view schematically showing a construction when an air conditioner of a cogeneration system according to the present invention is in a heating operation;
FIG. 3 shows a P-h line graph of the air conditioner according to the present invention; and
FIG. 4 is a view schematically showing a construction when an air conditioner of a cogeneration system according to the present invention is in an air cooling operation.

In the following detailed description, only certain exemplary embodiments of the present invention have been shown and described simply by way of illustration. As those skilled in the art will realize, the described embodiment may be modified in various different ways, all without departing from the spirit or scope of the present invention. Accordingly, the drawings and description are to be regarded as illustrative in nature and not restrictive. Like reference numerals designate like elements throughout.

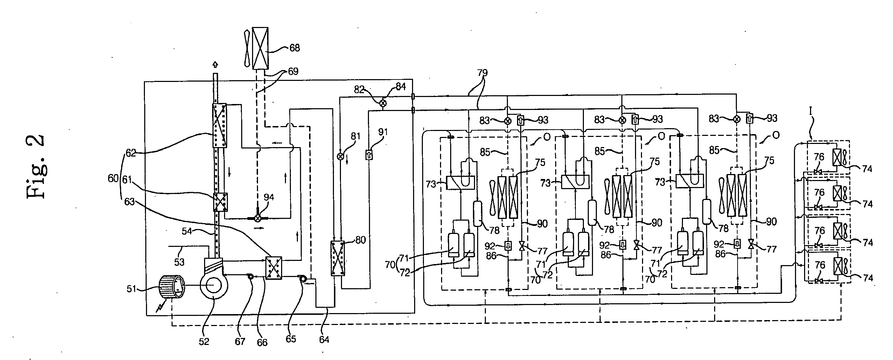

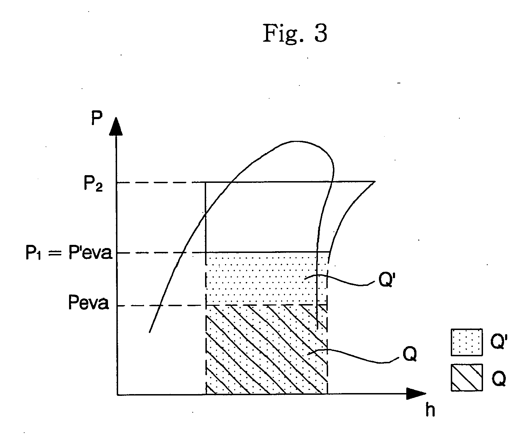

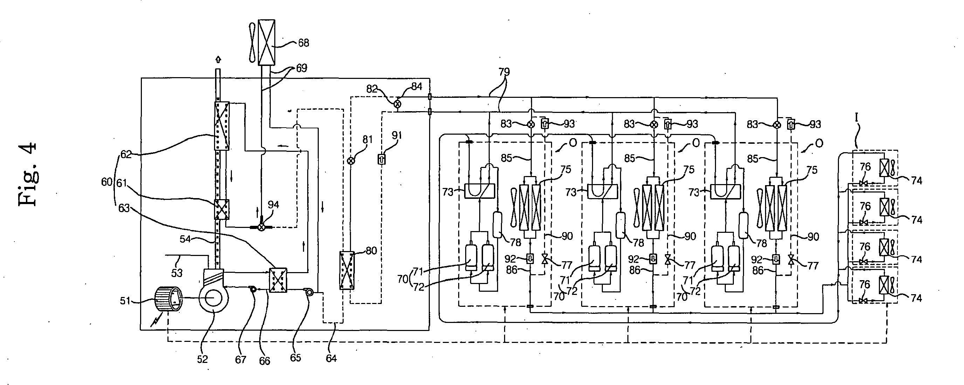

FIG. 2 is a view schematically showing a construction when an air conditioner of a cogeneration system according to the present invention is in a heating operation. FIG. 3 shows a P-h line graph of the air conditioner according to the present invention. FIG. 4 is a view schematically showing a construction when an air conditioner of a cogeneration system according to the present invention is in an air cooling operation.

The cogeneration system according to the present invention includes a generator 51 that generates electric power, a driving source that drives the generator 51 and generates heat, waste heat recovery means 60 that recovers waste heat of the driving source, an air conditioner and a waste heat supply heat exchanger 80, as shown in FIGS. 2 to 4.

The air conditioner includes a compressor 70, a 4-way valve 73, indoor heat exchangers 74, expansion valves 77 and outdoor heat exchangers 75. The waste heat supply heat exchanger 80 is disposed parallel to the outdoor heat exchangers 75. The waste heat supply heat exchanger 80 supplies heat, which is recovered from the waste heat recovery means 60, to a suction unit side of the compressor 70 during the heating operation of the air conditioner.

The generator 51 may be either an AC generator or a DC generator. The generator 51 has a rotator connected to an output shaft of the driving source. Accordingly, when the output shaft of the driving source is rotated, the generator 51 generates electric power.

The driving source may be an engine 52, a fuel cell or the like. In the present context, it is assumed that the driving source is the engine 52.

The engine 52 has a combustion chamber therein. The engine 52 is connected to a fuel pipe 53 that puts a fuel, such as Liquefied Natural Gas (LNG) or Liquefied Petroleum Gas (LPG), into the combustion chamber, and an exhaust pipe 54 along which the exhaust gas discharged from the combustion chamber is guided.

The waste heat recovery means 60 includes an exhaust gas heat exchanger that recovers the heat of the exhaust gas discharged from the engine 52, and a coolant heat exchanger 63 that recovers the heat of the coolant that has cooled the engine 52.

In this case, the exhaust gas heat exchanger may have two first and second exhaust gas heat exchangers 61, 62. The first and second exhaust gas heat exchangers 61, 62 are connected to the exhaust pipe 54 of the engine 52.

A thermal medium circulation flow path 64 along which heat from any one of the first and second exhaust gas heat exchangers 61, 62 and the coolant heat exchanger 63 is transferred to the waste heat supply heat exchanger 80 is disposed between the first and second exhaust gas heat exchangers 61, 62 and the coolant heat exchanger 63, and the waste heat supply heat exchanger 80.

That is, the thermal medium circulation flow path 64 causes a thermal medium, which is heated while it is sequentially circulated through the coolant heat exchanger 63, the first exhaust gas heat exchanger 61 and the second exhaust gas heat exchanger 62, to be introduced into the waste heat supply heat exchanger 80 and then to be transferred to the coolant heat exchanger 63.

The thermal medium circulation flow path 64 includes a thermal medium circulation pump 65 that circulates and pumps the thermal medium that is circulated through the thermal medium circulation flow path 64.

The coolant heat exchanger 63 is connected to the engine 52 by a coolant circulation flow path 66 along which the coolant, which is heated while cooling the engine 52, is circulated. A coolant pump 67 that pumps the coolant is disposed on the coolant circulation flow path 66.

Meanwhile, the air conditioner includes an outdoor unit (O) including the compressor 70, the 4-way valve 73 and the outdoor heat exchangers 75, and an indoor unit (I) including the indoor heat exchangers 74. The expansion valve includes an indoor expansion valve 76 disposed in the indoor unit (I), and an outdoor expansion valve 77 that is disposed in the outdoor unit (O) and is used only during the heating operation.

In this case, the outdoor unit (0) and the indoor unit (I) can be disposed one by one or in plural numbers. In the following description, it is assumed that the number of the outdoor unit (O) and the indoor unit (I) is one (1).

The compressor 70 disposed in the outdoor unit (O) may be one low compression inverter type compressor with a compression ratio of 1.5 to 2.5 or a plurality of low compression inverter type compressors. At least one of the plurality of low compression inverter type compressors may have a compression ratio of 1.5 to 2.5.

In the following description, it is assumed that each of the compressors 70 consists of two first and second compressors 71, 72.

The first compressor 71 may be a low compression inverter type compressor having a compression ratio of 1.5 to 2.5. The second compressor 72 may be a high compression constant speed type compressor with a compression ratio of 3, 4 or 5.

The suction units of the first and second compressors 71, 72 are connected by a common use accumulator 78.

Meanwhile, the waste heat supply heat exchanger 80 is disposed parallel to the outdoor heat exchangers 75 on a refrigerant circulation flow path 79 along which the refrigerants that are circulated through the air conditioner are guided.

A first opening and shutting valve 81 for preventing the refrigerants from flowing into the waste heat supply heat exchanger 80 during the air cooling operation is placed on the inlet side of the waste heat supply heat exchanger 80 on the refrigerant circulation flow path 79. Furthermore, a first check valve 91 for preventing the refrigerants from flowing backward into the waste heat supply heat exchanger 80 during the cooling operation is placed on the outlet side of the waste heat supply heat exchanger 80 on the refrigerant circulation flow path 79.

Furthermore, an air cooling flow path 84 for causing the refrigerants, which are discharged from the first and second compressors 71, 72, to bypass the waste heat supply heat exchanger 80 during the air cooling operation is disposed between the flow paths of the inlet side and the outlet side of the waste heat supply heat exchanger 80.

The refrigerants flow only during the air cooling operation. A second opening and shutting valve 82 for shutting the flow of the refrigerants during the heating operation is disposed on the air cooling flow path 84.

The cogeneration system further includes a bypass flow path 90 along which the refrigerants, which have passed the indoor expansion valves 76, bypass the outdoor heat exchangers 75 during the heating operation of the air conditioner.

The bypass flow path 90 has one end connected to an outdoor heat exchanger suction flow path 85 along which the refrigerants, which have passed the first and second compressors 71, 72, flow into the outdoor heat exchangers 75 during the during air cooling operation and has the other end connected to an outdoor heat exchanger discharge flow path 86 along which the refrigerants are discharged from the outdoor heat exchangers 75.

A third opening and shutting valve 83 for shutting the outdoor heat exchanger suction flow path 85 during the heating operation is disposed on the outdoor heat exchanger suction flow path 85. Furthermore, a second check valve 92 for preventing the refrigerants, which are introduced from the indoor unit (I), to flowing into the outdoor heat exchangers 75, is disposed on the outdoor heat exchanger discharge flow path 86.

Furthermore, the outdoor expansion valve 77 for expanding the refrigerants introduced from the indoor unit (I) side is disposed on the suction unit side of the bypass flow path 90. A third check valve 93 for preventing the refrigerants, which are introduced into the outdoor heat exchangers 75, from flowing backward into the bypass flow path 90 during the air cooling operation is disposed on the discharge unit side of the bypass flow path 90.

The cogeneration system further includes heat dissipation means for radiating heat, which is recovered from the coolant heat exchanger 63 and the first and second exhaust gas heat exchangers 61, 62, to the outside during the air cooling operation of the air conditioner.

The heat dissipation means includes the coolant heat exchanger 63, a heat dissipation heat exchanger 68 for radiating heat, which is recovered from the first and second exhaust gas heat exchangers 61, 62, into the air, and a heat dissipation flow path 69 connected to the thermal medium circulation flow path 64, for guiding the thermal medium into the heat dissipation heat exchanger 68.

A heat dissipation fan for ventilating the outdoor air toward the heat dissipation heat exchanger 68 is disposed on the side of the heat dissipation heat exchanger 68.

A 3-way valve 94 for switching the flow of the thermal medium depending on the air cooling or heating operation of the air conditioner is disposed at a portion where the thermal medium circulation flow path 64 and the heat dissipation flow path 69 are connected.

However, the present invention is not limited to the above embodiment. For example, the compressor 70 may include a low compression inverter type compressor having a compression ratio of 1.5 to 2.5 and a high compression inverter type compressor having a compression ratio of 3 to 5.

The operation of the cogeneration system constructed above according to the present invention will be described below.

If the engine 52 is driven, the generator 51 generates electric power and the generated electric power is supplied to the air conditioner, etc.

At this time, when the engine 52 is driven, the exhaust gas waste heat and the coolant waste heat of the engine 52 are recovered by the first and second exhaust gas heat exchangers 61, 62 and the coolant heat exchanger 63.

During the heating operation of the air conditioner, the thermal medium circulation pump 65 is driven and the 3-way valve 94 switches the flow path so that the thermal medium can be introduced into the waste heat supply heat exchanger 80, as shown in FIG. 2.

The thermal medium on the thermal medium circulation flow path 64 is pumped by the thermal medium circulation pump 65, passes through the coolant heat exchanger 63, the first exhaust gas heat exchanger 61 and the second exhaust gas heat exchanger 62 sequentially, and then introduces into the waste heat supply heat exchanger 80, thereby heating the waste heat supply heat exchanger 80.

Furthermore, the 4-way valve 73 of the air conditioner is switched to a heating mode.

The refrigerants compressed in the first and second compressors 71, 72 pass through the 4-way valve 73. The refrigerants are deprived of heat by the indoor air, while passing through the indoor heat exchangers 74, and are then expanded in the indoor expansion valves 76.

The refrigerants expanded in the indoor expansion valves 76 are introduced into the bypass flow path 90.

At this time, a second check valve 92 disposed on the part of the outdoor heat exchanger discharge flow path 86 prevents the refrigerants from flowing into the outdoor heat exchanger 75.

Furthermore, during the heating operation of the air conditioner, the second and third opening and shutting valves 82, 83 are shut and only the first opening and shutting valve 81 is opened.

Therefore, the refrigerants introduced into the bypass flow path 90 are introduced into the waste heat supply heat exchanger 80 through the outdoor expansion valves 77, the third check valve 93 and the first opening and shutting valve 91.

The refrigerants introduced into the waste heat supply heat exchanger 80 are evaporated by the heat of the waste heat supply heat exchanger 80.

That is, the outdoor heat exchanger 75 is not used, but the waste heat supply heat exchanger 80 serves as the evaporator.

The refrigerants evaporated in the waste heat supply heat exchanger 80 pass through the first check valve 91 and the 4-way valve 73 and are then absorbed by the first and second compressors 71, 72 through the common use accumulator 78.

Therefore, the heat recovered from the coolant heat exchanger 63 and the first and second exhaust gas heat exchangers 61, 62 is transferred to the suction unit sides of the first and second compressors 71, 72 of the waste heat supply heat exchanger 80.

The refrigerants absorbed by the first and second compressors 71, 72 heat the room while performing the above circulation. In this case, the refrigerants are evaporated in the waste heat supply heat exchanger 80 not in the outdoor heat exchangers 75. Accordingly, the air conditioner can provide a constant heating capability regardless of variations in an outdoor temperature.

Furthermore, since the waste heat of the engine 52 is supplied to the suction unit sides of the first and second compressors 71, 72, the condensation pressure can be increased to enhance the heating capability. Furthermore, since the pressure at the suction unit sides of the first and second compressors 71, 72 is increased, the first and second compressors 71, 72 can be prevented from being damaged.

Meanwhile, when the operation capacity of the air conditioner is small or an indoor or outdoor temperature is high, only the first compressor 71 having the low compression inverter type compressor with a low compression ratio is driven.

If only the first compressor 71 with a low compression ratio is driven, a suction pressure (P1) sucked by the first compressor 71, i.e., an evaporation pressure (P'eva=P1) of the refrigerants, which are supplied from the waste heat supply heat exchanger 80 used as the evaporator to the first compressor 71, becomes higher than an evaporation pressure (Peva) in the related art in which a compressor with a high compression ratio is used. Accordingly, an amount of recovered heat (Q') supplied from the waste heat supply heat exchanger 80 becomes higher than recovered heat (Q) that can be supplied in the related art, as shown in FIG. 3.

In other words, if the first compressor 71 with a low compression ratio is driven, the recovered heat (Q') supplied from the waste heat supply heat exchanger 80 can be used to a greater extent in comparison with the related art.

Therefore, even when the operation capacity of the air conditioner is small or an indoor or outdoor temperature is high, the heat of the waste heat supply heat exchanger 80 can be utilized to the maximum extent without the need to dissipate some of the heat. Accordingly, the waste heat use efficiency can be improved.

Furthermore, since a difference in pressure between the suction and discharge units of the first compressor 71 is small, the first compressor 71 can be prevented from being damaged and the efficiency can also be enhanced.

If the operation capacity of the air conditioner is increased afterward, the second compressor 72 (i.e., the high compression constant speed type compressor) is also driven.

Meanwhile, during the air cooling operation of the air conditioner, the thermal medium of the thermal medium circulation flow path 64 is pumped by the thermal medium circulation pump 65 and then has its waste heat recovered while sequentially passing through the coolant heat exchanger 63, the first exhaust gas heat exchanger 61 and the second exhaust gas heat exchanger 62, as shown in FIG. 4.

At this time, the 3-way valve 94 is switched so that the thermal medium can be moved to the heat dissipation heat exchanger 68. Therefore, the recovered waste heat is transferred to the heat dissipation heat exchanger 68 through the heat dissipation flow path 69 and then discharged into the air.

Therefore, during the air cooling operation, the waste heat of the engine 52 is not used to heat the waste heat supply heat exchanger 80, but is discharged into the air.

The 4-way valve 73 is then switched to an air cooling mode, the second and third opening and shutting valves 82, 83 are opened and the first opening and shutting valve 81 is shut.

Furthermore, the outdoor expansion valves 77 is turned off to shut the bypass flow path 90.

Therefore, the refrigerants compressed in the first and second compressors 71, 72 pass through the 4-way valve 73, the outdoor heat exchangers 75, the indoor expansion valves 76 and the indoor heat exchangers 74 sequentially and are then introduced into the first and second compressors 71, 72 through the 4-way valve 73.

At this time, the refrigerants compressed in the first and second compressors 71, 72 are condensed through the heat exchange with the outdoor air while passing through the outdoor heat exchangers 75, expanded through the indoor expansion valves 76, and exchange heat with the indoor air through the indoor heat exchangers 74, thereby cooling the room.

The cogeneration system constructed above according to the present invention has the following advantages.

The cogeneration system according to the present invention includes the waste heat supply heat exchanger that supplies waste heat, which is recovered from the engine, to the suction unit side of the compressor. Accordingly, the present invention is advantageous in that it can maximize the use efficiency of the waste heat.

Furthermore, the cogeneration system includes the low compression inverter type compressor having a compression ratio of 1.5 to 2.5, which is lower than that of the related art. Therefore, the present invention is advantageous in that it can maximize the efficiency of the system since the waste heat supplied from the waste heat supply heat exchanger can be utilized to a greater extent. The present invention is also advantageous in that it can prevent damage to the compressor and can save consumption power since a difference in pressure between the suction and discharge units of the compressor becomes small.

While the invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A cogeneration system comprising:
a generator that generates electric power;
a driving source that drives the generator and generates heat;
waste heat recovery means that recovers waste heat of the driving source;
an air conditioner including a compressor, a 4-way valve, indoor heat exchangers, expansion valves and an outdoor heat exchanger; and
a waste heat supply heat exchanger for supplying the heat, which is recovered from the waste heat recovery means, to a suction unit side of the compressor,
wherein the compressor has a compression ratio of 1.5 to 2.5.

2. The cogeneration system as claimed in claim 1, wherein the compressor is a low compression inverter type compressor having a variable compression ratio.

3. The cogeneration system as claimed in claim 1 or 2, wherein the air conditioner further comprises a high compression constant speed type compressor having a compression ratio of 3, 4 or 5.

4. The cogeneration system as claimed in claim 1 or 2, wherein the air conditioner further comprises a high compression inverter type compressor having a compression ratio having a compression ratio of 3 to 5.

5. The cogeneration system as claimed in any of claims 1 to 4, wherein the cogeneration system further comprises a bypass flow path along which the refrigerants, which have passed the expansion valves, bypass the outdoor heat exchangers during the heating operation of the air conditioner.

6. The cogeneration system as claimed in claim 5, wherein the outdoor expansion valve for expanding the refrigerants introduced from an indoor unit side is disposed on the suction unit side of the bypass flow path , and
a third check valve for preventing the refrigerants, which are sucked into the outdoor heat exchanger, from flowing backward into the bypass flow path during the air cooling operation is disposed on the discharge unit side of the bypass flow path.

7. The cogeneration system as claimed in any of claims 1 to 6, wherein the waste heat recovery means comprises:
exhaust gas heat exchangers for recovering the heat of an exhaust gas discharged from the driving source; and
a coolant heat exchanger for recovering the heat of the coolant that has cooled the driving source.

8. The cogeneration system as claimed in claim 7, wherein the cogeneration system further comprises heat dissipation means for dissipating the heat, which is recovered from the coolant heat exchanger and the exhaust gas heat exchangers to the outside during the air cooling operation of the air conditioner.

9. The cogeneration system as claimed in any of claims 1 to 8, wherein the waste heat supply heat exchanger is disposed parallel to the outdoor heat exchanger on a refrigerant circulation flow path along which the refrigerants that are circulated through the air conditioner are guided.

10. The cogeneration system as claimed in claim 9, wherein an air cooling flow path for causing the refrigerants discharged from the first and second compressors to bypass the waste heat supply heat exchanger during the air cooling operation is disposed between the flow paths of inlet and outlet sides of the waste heat supply heat exchanger.

11. A method of operating a cogeneration system according to any of claims 1 to 10.
